**Europäisches Patentamt**

(19) **European Patent Office**

**Office européen des brevets**

(11) Veröffentlichungsnummer: **0 135 867**

**B1**

(12) # EUROPÄISCHE PATENTSCHRIFT

(45) Veröffentlichungstag der Patentschrift:
**22.07.87**

(51) Int. Cl.⁴: **C 08 G 18/50,** C 08 G 18/66, C 08 G 18/14, C 08 G 18/32

(21) Anmeldenummer: **84110590.1**

(22) Anmeldetag: **06.09.84**

(54) **Verfahren zur Herstellung von mikrozellularen oder geschäumten Formkörpern und zur Durchführung dieses Verfahrens geeignete Verbindungen mit gegenüber Isocyanatgruppen reaktionsfähigen Gruppen.**

(30) Priorität: **16.09.83 DE 3333464**

(43) Veröffentlichungstag der Anmeldung:
**03.04.85 Patentblatt 85/14**

(45) Bekanntmachung des Hinweises auf die Patenterteilung:
**22.07.87 Patentblatt 87/30**

(84) Benannte Vertragsstaaten:
**DE FR GB IT**

(56) Entgegenhaltungen:
**EP-A-0 081 701**
**EP-A-0 109 605**
**US-A-3 256 213**
**US-A-3 425 964**

(73) Patentinhaber: **BAYER AG, Konzernverwaltung RP Patentabteilung, D-5090 Leverkusen 1 Bayerwerk (DE)**

(72) Erfinder: **Rasshofer, Werner, Dr., Wolfskaul 10, D-5000 Köln 80 (DE)**
Erfinder: **Meiners, Hans- Joachim, Dr., Ringstrasse 25, D-5090 Leverkusen 1 (DE)**
Erfinder: **Seel, Klaus, Dr., Märchenstrasse 72, D-5000 Köln 80 (DE)**
Erfinder: **Wussow, Hans- Georg, Dr., Benrodestrasse 51, D-4000 Düsseldorf 13 (DE)**

## Beschreibung

Die Erfindung betrifft ein neues Verfahren zur Herstellung von mikrozellularen oder geschäumten Formkörpern, wobei das in geschlossene Formen einzubringende Reaktionsgemisch auf Basis von organischen Polyisocyanaten und Verbindungen mit gegenüber Isocyanatgruppen reaktionsfähigen Gruppen als wesentliche Komponenten bestimmte, nachstehend näher beschriebene Ammoniumcarbonat- und/oder Ammoniumbicarbonat-Gruppen aufweisende Verbindungen enthält, sowie diese zur Durchführung des Verfahrens geeigneten Verbindungen.

Es ist bekannt, aus aliphatischen Mono- oder Polyaminen, Kohlendioxid und Wasser, Carbonate und/oder Bicarbonate (Hydrogencarbonate) dieser Amine herzustellen. Bei diesen bekannten Verfahren entstehen in der Regel bei Raumtemperatur feste, in Polyhydroxylverbindungen, wie sie üblicherweise zur Herstellung von Polyurethanen Verwendung finden, un- oder schwerlösliche, kristalline Verbindungen. Diese können mit Isocyanatgruppen aufweisenden Verbindungen zu Harnstoffgruppen aufweisenden höhermolekularen Verbindungen umgesetzt werden. So lehrt z. B. die US-PS 3 425 964 die Härtung von Polyurethanharzen mit festen Amincarbonaten, die bei 25°C unbeschränkt stabil sind oder auch die Herstellung geschäumter Produkte aus diesen Reaktionspartnern. Hierbei bedient man sich der Schwerlöslichkeit und damit verbundenen Reaktionsträgheit der Amincarbonate, indem man zunächst das Reaktionsgemisch beispielsweise auf eine Stahlplatte aufträgt und anschließend unter Hitzeeinwirkung und hierdurch hervorgerufene Freisetzung des Kohlendioxids und Vernetzungsreaktion mit dem freigesetzten Amin die Bildung der Schaumstruktur bewirkt. Ähnliche Verfahren sind in der veröffentlichten japanischen Patentanmeldung 92 010 (Anmeldung 72 13 068 vom 17.12.1968) und in der veröffentlichten japanischen Patentanmeldung 98 186 (Anmeldung 50-052 175 vom 3.9.1973) beschrieben.

Von diesen sehr speziellen Verfahren des Standes der Technik abgesehen, muß in der Schwerlöslichkeit der bekannten Carbonate bzw. Bicarbonate von organischen Polyaminen in den zur Herstellung von Polyurethan-Kunststoffen einzusetzenden Ausgangsmaterialien ein gravierender Nachteil gesehen werden, da im allgemeinen die einwandfreie Verträglichkeit der Reaktionspartner eine unerläßliche Voraussetzung für die Herstellung hochwertiger Polyisocyanat-Polyadditionsprodukte ist.

Sehr wahrscheinlich haben aus diesem Grund die bekannten, bei Raumtemperatur festen Amincarbonate als Rohstoff bei der Herstellung von Polyurethan-Kunststoffen keinen Eingang in die Praxis gefunden.

Bekannt sind aus der US-A-3 256 213 auch schon zellige Isocyanat-Polyamin-Reaktionsprodukt, wobei ein Polyisocyanat mit einem Salz, z. B. einem Carbamat eines Polyamins umgesetzt wird. Um diese Reaktion zu starten muß aber zuvor das Amin aus em Salz durch Reaktion mit einer Base freigesetzt werden.

Überraschenderweise wurden nunmehr neue, gegenüber Isocyanatgruppen reaktionsfähige Gruppen aufweisende Verbindungen aufgefunden, deren gegenüber Isocyanatgruppen reaktionsfähige Gruppen zumindest zum Teil Ammoniumcarbonat- bzw. Ammoniumbicarbonat-Gruppen darstellen, wie sie durch Umsetzung von aliphatisch gebundenen primären oder sekundären Aminogruppen mit Kohlendioxid und Wasser entstehen, und die bei Raumtemperatur lagerstabile Flüssigkeiten darstellen, die spontan mit organischen Polyisocyanaten unter Freisetzung des Kohlendioxids abreagieren. Die (Mit)verwendung dieser nachstehend näher beschriebenen erfindungsgemäßen Verbindungen bei der Herstellung von Polyisocyanat-Polyadditionsprodukten (Polyharnstoffen bzw. Polyurethan-Polyharnstoffen) eröffnet eine Reihe bemerkenswerter Vorteile, insbesondere bei der Herstellung von mikrozellularen oder geschäumten Formkörpern auf Basis der genannten Ausgangsmaterialien.

Bei der Herstellung von mikrozellularen Formkörpern auf Polyharnstoff-Basis, d.h. von Formkörpern, deren Dichte ca. mindestens 10 %, vorzugsweise 20 bis 40 % unter der Dichte eines entsprechenden, massiven Formkörpers liegt, ermöglicht die Mitverwendung der neuen Verbindungen zunächst eine einwandfrei kontrollierbare Dosierung des Treibmittels (abgespaltenes Kohlendioxid). Außerdem eignen sich die neuen erfindungsgemäßen Verbindungen ausgezeichnet zur Herstellung von geschäumten Polyurethanformstoffen mit einer kompakten Randzone, d.h. von Formkörpern, deren Rohdichte mehr als 40 %, im allgemeinen 45 bis 85 % unter der Dichte eines entsprechenden, massiven Formkörpers liegt. Bei der Herstellung von geschäumten Formkörpern nach dem Verfahren des Standes der Technik, insbesondere unter Mitverwendung von organischen Treibmitteln, werden oftmals sogenannte Liegezonenmarkierungen sichtbar, da das Reaktionsgemisch nicht sofort zu schäumen beginnt. Eine oftmals nicht ausreichend gegebene Verträglichkeit der Reaktionspartner wirkt sich außerdem in Form von, am Formkörper erkennbaren, Schlieren aus. Auch diese nachteilhaften Erscheinungen können durch Mitverwendung der erfindungswesentlichen Verbindungen beseitigt werden, da diese mit dieser Polyisocyanatkomponente spontan unter Bildung von Kohlendioxid reagieren, so daß keine sichtbar markierten Liegezonen entstehen können, und wodurch eine zusätzliche Vermischung des Reaktionsgemisches unter Vermeidung von Inhomogenitäten und damit von Schlierenbildung erfolgt. Die Mitverwendung der erfindungswesentlichen Verbindungen bei der Herstellung derartiger Formkörper bewirkt daher oft bereits in äußerst niedrigen Konzentrationen eine wesentliche Verbesserung der Oberfläche der Formteile, dank derer beispielsweise durch Tauchlackierung der Formteile homogene Lackierungen erzielbar sind.

Gegenstand der Erfindung ist somit ein Verfahren zur Herstellung von mikrozellularen oder geschäumten Formkörpern auf Polyharnstoff-Basis durch Umsetzung in geschlossenen Formen eines Reaktionsgemischs aus

a) einer Polyisocyanat-Komponente, bestehend aus mindestens einem Di- oder Polyisocyanat mit ausschließlich aromatisch gebundenen Isocyanatgruppen,

2

b) mindestens einer Verbindung mit gegenüber Isocyanatgruppen reaktionsfähigen Gruppen und

c) gegebenenfalls den in der Polyurethanchemie an sich bekannten Hilfs- und Zusatzmitteln,

nach dem one-shot-System unter Einhaltung einer NCO-Kennzahl von 70 bis 130, wobei zwei Reaktionskomponenten zum Einsatz gelangen, wobei die Polyisocyanatkomponente a) die erste und die Komponente b) die zweite Reaktionskomponente darstellen, und wobei die gegebenenfalls mitzuverwendenden Hilfs- und Zusatzmittel c) der Komponente a) und/oder der Komponente b) zugemischt werden, dadurch gekennzeichnet, daß man als Komponente b) mindestens eine, gegebenenfalls zusammen mit weiteren, gegenüber Isocyanaten reaktionsfähigen Verbindungen vorliegende, mindestens drei aliphatische Ethergruppen aufweisende, n aliphatisch gebundene, gegenüber Isocyanatgruppen reaktionsfähige Gruppen aufweisende Verbindung b1) verwendet, wobei n für eine ganze oder (im statistischen Mittel) gebrochene Zahl von 2 bis 4 steht,

(i) deren gegenüber Isocyanatgruppen reaktionsfähigen Gruppen zu mindestens (100 : n) % aliphatisch gebundene primäre oder sekundäre Aminogruppen darstellen, die

(ii) ihrerseits zu mindestens 20 % in Form von, im Sinne der Isocyanat-Additionsreaktion difunktionellen, Ammoniumcarbamatgruppen, wie sie durch Umsetzung von aliphatisch gebundenen, primären oder sekundären Aminogruppen mit Kohlendioxid entstehen und/ oder in Form von Ammoniumcarbonat- und/oder Ammoniumbicarbonatgruppen, wie sie durch Umsetzung von aliphatisch gebundenen, primären oder sekundären Aminogruppen mit Kohlendioxid und Wasser entstehen, vorliegen, wobei mindestens 20 Äquivalentprozent der genannten modifizierten Aminogruppen Carbonat- und/oder Bicarbonatgruppen darstellen, wobei

(iii) die unmodifizierten, Ethergruppen aufweisenden Verbindungen ein Molekulargewicht von 200 bis 10.000 aufweisen und wobei

(iv) sich die gegenüber Isocyanatgruppen reaktionsfähigen Gruppen (des Gesamtgemischs) zu 0,2 - 100 Äquivalentprozent aus Ammoniumcarbamat- und/oder -carbonat- und/oder -bicarbonat-Gruppen zusammensetzen.

Gegenstand der Erfindung sind auch die zur Durchführung dieses Verfahrens geeigneten, mindestens 3 aliphatische Ethergruppen und n aliphatisch gebundene, gegenüber Isocyanatgruppen reaktionsfähige Gruppen aufweisende Verbindungen, wobei n für eine ganze oder (im statistischem Mittel) gebrochene Zahl von 2 bis 4 steht, die gegebenenfalls im Gemisch mit Ammoniumcarbamat-, -carbonat- und -bicarbonat-freien Verbindungen des Molekulargewichtsbereichs 400 bis 10.000 mit gegenüber Isocyanatgruppen reaktionsfähigen Gruppen und/oder gegebenenfalls im Gemisch mit Ammoniumcarbamat-, -carbonat- und -bicarbonatfreien, im Sinne der Isocyanat-Polyadditionsreaktion mindestens difunktionellen Kettenverlängerungs- bzw. Vernetzungsmitteln des Molekulargewichtsbereichs 18 bis 399 und/oder gegebenenfalls im Gemisch mit den in der Polyurethanchemie an sich bekannten Hilfs- und Zusatzmitteln vorliegen, dadurch gekennzeichnet, daß

(i) (100 : n) % der insgesamt n gegenüber Isocyanatgruppen reaktionsfähigen Gruppen aliphatisch gebundene primäre und/oder sekundäre Aminogruppen darstellen, die

(ii) ihrerseits zu mindestens 20 % in Form von, im Sinne der Isocyanat-Additionsreaktion difunktionellen, Ammoniumcarbamatgruppen, wie sie durch Umsetzung von aliphatisch gebundenen, primären oder sekundären Aminogruppen mit Kohlendioxid entstehen und/oder in Form von Ammoniumcarbonat- und/oder Ammoniumbicarbonatgruppen, wie sie durch Umsetzung von aliphatisch gebundenen, primären oder sekundären Aminogruppen mit Kohlendioxid und Wasser entstehen, vorliegen, wobei mindestens 20 Äquivalentprozent der genannten modifizierten Aminogruppen Carbonat- und/oder Bicarbonatgruppen darstellen, wobei

(iii) die unmodifizierten, Ethergruppen aufweisenden Verbindungen ein Molekulargewicht von 200 bis 10.000 aufweisen und wobei

(iv) sich die gegenüber Isocyanatgruppen reaktionsfähigen Gruppen (im Gesamtgemisch)zu 0,2 bis 100 Äquivalentprozent aus Ammoniumcarbamat-, -carbonat- und/oder -bicarbonat-Gruppen zusammensetzen.

Bei den zuletzt genannten, beim erfindungsgemäßen Verfahren als Komponente b1) einzusetzenden, erfindungsgemäßen Verbindungen handelt es sich um Derivate von mindestens drei aliphatische Ethergruppen aufweisenden, gegebenenfalls als Gemisch vorliegenden Verbindungen mit (im statistischen Mittel) 2 bis 4, vorzugsweise 2 bis 3, gegenüber Isocyanatgruppen reaktionsfähigen Gruppen eines, aus der Funktionalität und dem Gehalt an gegenüber Isocyanatgruppen reaktionsfähigen Gruppen berechenbaren (mittleren) Molekulargewichts von 200 bis 10.000, vorzugsweise 400 bis 10.000 und insbesondere 1.000 bis 6.000. In diesen "Derivaten" stellen die gegenüber Isocyanatgruppen reaktionsfähigen Gruppen (im statistischen Mittel) mindestens 100 : n Äquivalentprozent aller vorliegenden, gegenüber Isocyanatgruppen reaktionsfähigen Gruppen aliphatisch gebundene, primäre und/oder sekundäre Aminogruppen dar (n bezeichnet die Funktionalität der Verbindungen mit gegenüber Isocyanatgruppen reaktionsfähigen Gruppen im Sinne der Isocyanat-Additionsreaktion, d.h. im Falle des Vorliegens von Gemischen von unterschiedlichen Verbindungen die mittlere Funktionalität des Gemischs und stellt eine ganze oder gebrochene Zahl von 2 bis 4, vorzugsweise 2 oder 3 dar). Vorzugsweise stellen mindestens 50 %, oftmals 80 - 100 % aller gegenüber Isocyanatgruppen reaktionsfähiger Gruppen derartige Aminogruppen dar. Erfindungswesentlich ist nun, daß diese Aminogruppen zumindest teilweise, d.h. zu mindestens 20, vorzugsweise mindestens 50 % als, im Sinne der Isocyanat-Additionsreaktion difunktionelle Ammoniumcarbamatgruppen, wie sie durch Umsetzung von aliphatisch gebundenen, primären oder sekundären Aminogruppen mit Kohlendioxid entstehen und/oder als

3

Ammoniumcarbonatgruppen und/oder Ammoniumbicarbonatgruppen, wie sie durch Umsetzung von aliphatisch gebundenen primären oder sekundären Aminogruppen mit Kohlendioxid und Wasser entstehen, vorliegen, wobei des weiteren gewährleistet sein muß, daß mindestens 20 Äquivalentprozent, vorzugsweise mindestens 50 Äquivalentprozent und insbesondere 80 bis 100 Äquivalentprozent, bezogen auf alle modifizierten Aminogruppen, Ammoniumcarbonat- und/oder Ammoniumbicarbonatgruppen darstellen.

Die erfindungsgemäßen Verbindungen stellen vorzugsweise Derivate der aus der Polyurethanchemie an sich bekannten, aliphatischen Polyether-Polyole mit primären und/oder sekundären Hydroxylgruppen dar, in denen zumindest ein Teil der vorliegenden Hydroxylgruppen durch an sich bekannte Methoden in Aminogruppen der genannten Art und anschließender, zumindest teilweiser Modifizierung der eingeführten Aminogruppen mit Kohlendioxid und Wasser in modifizierte Aminogruppen überführt worden sind.

Bei der Umsetzung von primären oder sekundären Aminogruppen mit Kohlendioxid bzw. mit Kohlendioxid und Wasser entstehen je nach Molverhältnis Kohlendioxid : Wasser im Sinne der Isocyanat-Additionsreaktion difunktionelle Carbamate oder Bicarbonate bzw. Carbonate wie aus den nachstehenden Gleichungen 1 - 3 ersichtlich ist (R steht für einen beliebigen indifferenten (cyclo)aliphatischen Rest):

(1) $2R\text{-}NH_2 + CO_2 \rightarrow R\text{-}NH\text{-}CO\text{-}O^{(-)} H_3N^{(+)}\text{-}R$
(2) $R\text{-}NH_2 + H_2O + CO_2 \rightarrow R\text{-}NH_3^{(+)} HCO_3^{(-)}$
(3) $R\text{-}NH_2 + H_2O + 1/2\ CO_2 \rightarrow R\text{-}NH_3^{(+)} [CO_3^{2-}]_{1/2}$

Hierzu sei bezüglich der Strukturen und Herstellung von derartigen Kohlensäurederivaten von Aminen auf die Veröffentlichungen von A. Smola in Mitt. Chem. Forsch. Inst. Öster. 2, 38-40, 43-45 (1948)/C.A. (1949), 6157h verwiesen. Die Frage, ob es sich bei den Modifizierungsprodukten der Amine mit Kohlendioxid und Wasser vorwiegend um Carbonate oder Bicarbonate handelt, ist im Rahmen der Erfindung unwesentlich. So kann beispielsweise davon ausgegangen werden, daß bei Umsetzung von 1 Mol an primären Aminogruppen mit 0,6 Mol Kohlendioxid in Gegenwart von Wasser mindestens 60 % der Aminogruppen (Grenzwert für den Fall der ausschließlichen Bildung von Bicarbonatgruppen), im allgemeinen jedoch ein wesentlich höherer Prozentsatz der Aminogruppen in modifizierte Aminogruppen überführt wird (Bildung von Bicarbonat- und von Carbonatgruppen). Wesentlich ist demgegenüber, daß die Wassermenge bei der Modifizierung der Amine so gewählt wird, daß, den obigen Ausführungen entsprechend, höchstens 80 Äquivalentprozent der modifizierten Aminogruppen in Form von Carbamatgruppen (Gleichung (1)) vorliegen. Die genannten Modifizierungsprodukte der Aminogruppen aufweisenden Verbindungen werden nachstehend zusammenfassend als "Kohlensäuresalze" bezeichnet.

Die zur Herstellung der "Kohlensäuresalze" einsetzbaren "Aminopolyether" oder "Polyetheramine" sind an sich bekannt. Ihre Herstellung erfolgt z. B. durch zumindest teilweise Überführung der primär und/oder sekundär gebundenen Hydroxylgruppen der an sich bekannten Polyhydroxypolyether in aliphatisch gebundene, vorzugsweise primäre Aminogruppen entweder durch Ersatz der Hydroxylgruppen durch Aminogruppen oder durch Umsetzung der Hydroxylgruppen mit Aminogruppen oder in Aminogruppen überführbare Gruppen aufweisenden Reaktionspartnern. So kann beispielsweise eine Aminierung von Polyhydroxyl-Polyethern wie z. B. Polypropylenglykolethern durch Reaktion mit Ammoniak in Gegenwart von Raney-Nickel und Wasserstoff durchgeführt werden (BE-PS 634 741). US-PS 3 654 370 beschreibt die Herstellung von Polyoxyalkylen-Polyaminen durch Umsetzung des entsprechenden Polyols mit Ammoniak und Wasserstoff in Gegenwart eines Nickel-, Kupfer-, Chrom-Katalysators. In der DE-PS 1 193 671 wird die Herstellung von Polyethern mit Amino-Endgruppen durch Hydrierung von cyanethylierten Polyoxypropylenethern beschrieben. Weitere Methoden zur Herstellung von Polyoxyalkylen(Polyether)-aminen sind in US-PS 3 155 728, US-PS 3 236 895 und FR-PS 1 551 065 beschrieben. In der FR-PS 1 466 707 wird beispielsweise die Herstellung von sekundäre Amino-Endgruppen aufweisenden Polyethern beschrieben.

Als als Ausgangsmaterialien geeignete Polyhydroxypolyether kommen beliebige, mindestens drei aliphatisch gebundene Ethergruppen aufweisende Polyhydroxypolyether mit 2 - 4, vorzugsweise 2 - 3 an aliphatische, primäre oder sekundäre Kohlenstofatome gebundene Verbindungen in Betracht. Diese an sich bekannten Polyhydroxypolyether werden z. B. durch Polymerisation von Epoxiden wie Ethylenoxid, Propylenoxid, Butylenoxid, Tetrahydrofuran, Styroloxid oder Epichlorhydrin mit sich selbst, z. B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z. B. Ethylenglykol, Propylenglykol-(1,3) oder -(1,2), Trimethylolpropan, Glycerin, Sorbit, 4,4'-Dihydroxy-diphenylpropan, Anilin, Ethanolamin oder Ethylendiamin hergestellt. Vielfach sind solche Polyether bevorzugt, die überwiegend (bis zu 90 Gew.-%, bezogen auf alle vorhandenen OH-Gruppen im Polyether) sekundäre OH-Gruppen aufweisen.

Nach DE-OS 2 948 419, EP-OS 71 138 und EP-OS 71 139 werden aliphatische Aminopolyether durch Hydrolyse von endständigen Isocyanatgruppen aufweisenden Verbindungen erhalten. Bei diesem Verfahren werden vorzugsweise zwei oder drei Hydroxylgruppen aufweisende Polyether mit Polyisocyanaten zu NCO-Prepolymeren umgesetzt und in einem zweiten Schritt die Isocyanatgruppe durch Hydrolyse in eine Aminogruppe überführt. Auch solche Urethangruppen aufweisende Aminopolyether sind zur Herstellung der erfindungsgemäßen "Kohlensäuresalze" geeignet.

Bei der Überführung der Polyhydroxypolyether in Aminopolyether nach einem der beispielhaft genannten Verfahren muß auf jeden Fall darauf geachtet werden, daß (im statistischen Mittel) mindestens (100 : n) % (n = Funktionalität des Polyhydroxypolethers), vorzugsweise mindestens 50 % und besonders bevorzugt 80 - 100 % der Hydroxylgruppen in Aminogruppen überführt werden.

Im übrigen muß darauf geachtet werden, daß solche Polyhydroxypolyether eingesetzt werden, die zu "Aminopolyethern" eines aus der Funktionalität und dem Gehalt an funktionellen Gruppen errechenbaren Molekulargewicht von 200 bis 10.000, vorzugsweise 400 bis 10.000 und insbesondere 1.000 bis 6.000 führen.

Vor der Herstellung der "Kohlensäuresalze" aus dem insbesondere primäre Aminogruppen aufweisenden Amino-Polyethern können gewünschtenfalls die primären Aminogruppen ganz oder teilweise in sekundäre Aminogruppen überführt werden. Dies kann beispielsweise durch Anlagerung von olefinisch ungesättigten Verbindungen wie z. B. Styrol, Allylalkohol, α,β-ungesättigten Nitrilen wie Acrylnitril; α,β-ungesättigten Carbonsäureestern wie (Meth)Acrylsäureethylester, Crotonsäureethylester oder α,β-ungesättigten Carbonsäuren wie Acrylsäure oder Methacrylsäure gemäß F. Möller in Houben-Weyl, Methoden der organischen Chemie, Band XI/I, Thieme-Verlag, Stuttgart, 1957, S. 267 erfolgen.

Die Herstellung der "Kohlensäuresalze" aus den "Aminopolyethern" (der letztgenannte Begriff steht stellvertretend für reine "Aminopolyether" und für nur partiell aminierte, d.h. noch alkoholische Hydroxylgruppen aufweisende Verbindungen) ist einfach. Dazu genügt es im Regelfall, die Aminopolyether oder ein Gemisch aus verschiedenen Aminopolyethern mit einer berechneten Wassermenge zu versetzen und dann in das Gemisch Kohlendioxid einzuleiten. Die Wassermenge wird entsprechend den obigen Ausführungen so gewählt, daß höchstens 80 Äquivalentprozent der "Kohlensäuresalze" Ammoniumcarbamatgruppen darstellen. Vorzugsweise werden pro Mol an Aminogruppen des Aminopolyethers 0,2 bis 2, insbesondere 0,5 bis 1 Mol Wasser eingesetzt.

Die Einleitung des Kohlendioxids erfolgt vorzugsweise unter Normaldruck. Es kann jedoch auch bei Überdruck gearbeitet werden. Sowohl die Zugabe von Wasser zum Amin als auch das Einleiten von $CO_2$ in die aminisch/wäßrige Phase sind exotherm; die Wärmefreisetzung ist in Anbetracht des relativ geringen Aminogruppengehalts bei den in Frage kommenden Aminoverbindungen so milde, daß im allgemeinen nicht gekühlt werden muß. Es ist aber auch möglich, festes Kohlendioxid, sog. "Trockeneis", zu verwenden.

Es können bei der Modifizierungsreaktion auch Lösungsmittel wie z. B. Methanol, Ethanol, Dioxan oder Acetonitril mitverwendet werden, obwohl dies im allgemeinen nicht erforderlich ist.

Die Modifizierung der Aminopolyether mit Wasser und Kohlendioxid wird im allgemeinen innerhalb des Temperaturbereichs von 10 bis 70, vorzugsweise 20 bis 40° C durchgeführt. Im allgemeinen wird solange Kohlendioxid eingeleitet, bis nur noch eine geringfügige Kohlendioxidaufnahme bzw. Kohlendioxid-Sättigung zu beobachten ist.

Dadurch ist gewährleistet, daß die Mehrzahl der in den Aminopolyethern vorgelegenen Aminogruppen in eine Salzform überführt wird. Entsprechend den oben gemachten Ausführungen können jedoch auch geringere Mengen an Kohlendioxid eingebracht werden, obwohl dies weniger bevorzugt ist.

Die "Kohlensäuresalze", d.h. die erfindungsgemäßen Verbindungen mit gegenüber Isocyanatgruppen reaktionsfähigen Gruppen weisen eine im Vergleich zu den als Ausgangsmaterialien eingesetzten Polyhydroxypolyethern bzw. Aminopolyethern allenfalls leicht erhöhte Viskosität auf. Sie stellen bei Raumtemperatur flüssige, praktisch beliebig lang ohne Abspaltung von Kohlendioxid lagerfähige Substanzen dar.

Die erfindungsgemäßen Verbindungen mit gegenüber Isocyanatgruppen reaktionsfähigen Gruppen stellen die erfindungswesentliche Komponente b1) des erfindungsgemäßen Verfahrens dar. Obwohl es im Prinzip denkbar ist, die erfindungsgemäßen Verbindungen, die, den oben gemachten Ausführungen entsprechend, im allgemeinen Gemische von Einzelkomponenten unterschiedlicher Struktur darstellen, als alleinige Reaktionspartner für die weiter unten beispielhaft genannten Polyisocyanate a) einzusetzen, werden die erfindungsgemäßen Verbindungen vorzugsweise im Gemisch mit weiteren Abmischkomponenten eingesetzt.

Neben den genannten, erfindungswesentlichen Verbindungen b1) können bei der Durchführung des erfindungsgemäßen Verfahrens

a) eine Polyisocyanat-Komponente, bestehend aus mindestens einem Di- oder Polyisocyanat mit ausschließlich aromatisch gebundenen Isocyanatgruppen, sowie gegebenenfalls

b2) mindestens eine, Ammoniumcarbamat-, -carbonat- und -bicarbonatgruppen-freie Verbindung des Molekulargewichtsbereichs 400 bis 10.000 mit mindestens 2 gegenüber Isocyanatgruppen reaktionsfähigen Gruppen, sowie gegebenenfalls

b3) mindestens ein, im Sinne der Isocyanat-Polyadditionsreaktion mindestens difunktionelles, Ammoniumcarbamat-, -carbonat- und -bicarbonatgruppenfreies Kettenverlängerungs- bzw. Vernetzungsmittel des Molekulargewichtsbereichs 18 bis 399, sowie gegebenenfalls

c) die in der Polyurethanchemie an sich bekannten Hilfs- und Zusatzmittel

als Aufbaukomponenten für die mikrozellularen bzw. geschäumten Formkörper zum Einsatz kommen. Die Aufbaukomponenten b2) und b3) werden hierbei im Gemisch mit der erfindungswesentlichen Komponente b1) eingesetzt. Sie stellen daher Abmischkomponenten für diese Komponente b1) dar.

Die Hilfs- und Zusatzmittel können der Polyisocyanatkomponente a) und/oder der Komponente b) zugemischt werden. Vorzugsweise werden die Hilfs- und Zusatzmittel den vereinigten Komponenten b) zugemischt.

Bei der beim erfindungsgemäßen Verfahren einzusetzenden Polyisocyanatkomponente a) handelt es sich um aromatische Di- und/oder Polyisocyanate, d.h. um solche, die ausschließlich aromatisch gebundene Isocyanatgruppen aufweisen. Beispiele für derartige Verbindungen sind 2,4- und/oder 2,6-Diisocyanatotoluol, 2,2'-, 2,4'-und/oder 4,4'-Diisocyanatodiphenylmethan, Gemische dieser letztgenannten Isomeren mit ihren höheren Homologen, wie sie bei der bekannten Phosgenierung von Anilin/Formaldehyd-Kondensaten anfallen, Urethangruppen aufweisende Umsetzungsprodukte der genannten Di- und/ oder Polyisocyanate mit unterschüssigen Mengen an aliphatischen Polyhydroxylverbindungen des Molekulargewichtsbereichs 62 bis 700 wie z. B. Ethylenglykol, Trimethylpropan, Propylenglykol, Dipropylenglykol oder Polypropylenglykolen des genannten Molekulargewichtsbereichs, durch partielle Carbodiimidisierung der Isocyanatgruppen der genannten Di- und/oder Polyisocyanate modifizierte Di- und/oder Polyisocyanate, Methyl-substituierte Diisocyanate der Diphenylmethanreihe bzw. deren Gemische der beispielsweise in EP-OS 0 024 665 beschriebenen Art oder beliebige Gemische derartiger aromatischer Di- und Polyisocyanate.

Zu den bevorzugten Ausgangsmaterialien a) gehören die bei Raumtemperatur flüssigen Derivate des 4,4'-Diisocyanatodiphenylmethans, beispielsweise die Urethangruppen aufweisenden Polyisocyanate, die gemäß DE-PS 1 618 380 (US-PS 3 644 457) durch Umsetzung von 1 Mol 4,4'-Diisocyanatodiphenylmethan mit 0,05 bis 0,3 Mol an niedermolekularen Diolen oder Triolen, vorzugsweise Polypropylenglykolen mit einem unter 700 liegenden Molekulargewicht, zugänglich sind, oder Carbodiimid- und/oder Uretonimingruppen aufweisende Diisocyanate auf Basis von 4,4'-Diisocyanatodiphenylmethan, wie sie beispielsweise gemäß US-PS 3 152 162, US-PS 3 384 653, US-PS 3 449 256, DE-OS 2 537 685 oder EP-OS 5233 (US-Anmeldung 903 308) zugänglich sind. Auch die entsprechenden Modifizierungsprodukte auf Basis von Gemischen aus 2,4'- und 4,4'-Diisocyanatodiphenylmethan oder auch Gemische der wie beschrieben modifizierten 4,4'-Diisocyanatodiphenylmethane mit untergeordneten Mengen an höher als difunktionellen Polyisocyanaten der Diphenylmethanreihe, beispielsweise solche der in DE-OS 2 624 526 beschriebenen Art gehören zu den bevorzugten Polyisocyanaten. Im allgemeinen handelt es sich bei den bevorzugten, erfindungsgemäß einzusetzenden Polyisocyanaten um bei Raumtemperatur flüssige, gegebenenfalls wie beschrieben chemisch modifizierte Polyisocyanate bzw. Polyisocyanatgemische der Diphenylmethanreihe einer (mittleren) NCO-Funktionalität von 2 bis 2,5, vorzugsweise 2 bis 2,2 und insbesondere von 2, in denen als Hauptkomponente (mehr als 50 Gew.-%) 4,4'-Diisocyanatodiphenylmethan vorliegt.

Bei der gegebenenfalls mitzuverwendenden Komponente b2) handelt es sich im allgemeinen um die aus der Polyurethanchemie bekannten Polyesterpolyole eines osmotisch bestimmbaren (mittleren) Molekulargewichts von 400 bis 10.000, vorzugsweise 1.000 bis 7.000 und insbesondere 2.000 bis 6.000, vorzugsweise jedoch um die aus der Polyurethanchemie bekannten Polyetherpolyole eines, aus der Funktionalität und dem Gehalt an funktionellen Gruppen berechenbaren Molekulargewichts von 400 bis 10.000, vorzugsweise 1.000 bis 7.000 und insbesondere 2.000 bis 6.000, bzw. um Gemische derartiger Verbindungen mit einem mittleren Molekulargewicht innerhalb der genannten Bereiche.

Geeignete Polyesterpolyole sind die bekannten Veresterungsprodukte niedermolekularer, mehrwertiger Alkohole wie z. B. Ethylenglykol, 1,2-Dihydroxypropan, 1,3-Dihydroxypropan, 1,2-Dihydroxybutan, 1,4-Dihydroxybutan, 1,6-Dihydroxyhexan, Neopentylglykol, Glycerin oder Trimethylolpropan mit unterschüssigen Mengen an mindestens zweibasischen Säuren bzw. deren Anhydriden wie z. B. Adipinsäure, Phthalsäure oder Hexahydrophthalsäure bzw. den Anhydriden der letztgenannten Säuren.

Geeignete Polyetherpolyole sind beispielsweise die Verbindungen, die bereits oben beispielhaft im Zusammenhang mit der Herstellung der erfindungswesentlichen Komponente b1) genannt worden sind, wobei hier jedoch nur solche Polyetherpolyole eines Molekulargewichts von mindestens 400 in Betracht kommen. Grundsätzlich ist es auch möglich, als Abmischkomponente b2) für die erfindungswesentlichen Verbindungen b1) solche Polyester bzw. Polyether einzusetzen, deren Hydroxylgruppen ganz oder teilweise nach einem der oben beispielhaft genannten Verfahren in Aminogruppen überführt worden sind. Vorzugsweise werden jedoch die genannten Hydroxylgruppen aufweisenden Verbindungen als Komponente b2) verwendet. Die Komponente b2) weist im allgemeinen eine (mittlere) Funktionalität im Sinne der Isocyanat-Additionsreaktion von 2 bis 4, vorzugsweise 2 bis 3 auf.

Bei der Komponente b3) handelt es sich um Verbindungen bzw. Gemische von Verbindungen, die ein Molekulargewicht von 18 bis 399 aufweisen, und die mindestens 2 gegenüber Isocyanatgruppen reaktionsfähige Gruppen tragen. Vorzugsweise stellen diese Kettenverlängerungs- bzw. Vernetzungsmittel Verbindungen oder Gemische von Verbindungen dar, die aus der Gruppe bestehend aus
(i) aromatischen Diaminen des Molekulargewichtsbereichs 108 bis 399,
(ii) gegebenenfalls Ethergruppen aufweisenden Aminoalkoholen des Molekulargewichtsbereichs 61 bis 399,
(iii) aliphatischen Polyaminen des Molekulargewichtsbereichs 60 bis 399 und
(iv) einfachen mehrwertigen Alkoholen des Molekulargewichtsbereichs 62 bis 399 ausgewählt sind.

Geeignete aromatische Diamine (i) sind beliebige aromatische Verbindungen des genannten Molekulargewichtsbereichs, die zwei primäre und/oder sekundäre, aromatisch gebundene Aminogruppen aufweisen. Bevorzugte aromatische Diamine (i) sind solche, die zumindest in jeweils einer ortho-Stellung zu den Aminogruppen einen Alkylsubstituenten aufweisen, insbesondere solche, die in ortho-Stellung zu der ersten Aminogruppe mindestens einen Alkylsubstituenten und in ortho-Stellung zur zweiten Aminogruppe zwei Alkylsubstituenten mit jeweils 1 bis 3 Kohlenstoffatomen, aufweisen, besonders bevorzugt solche, die in jeweils mindestens einer ortho-Stellung zu den Aminogruppen einen Ethyl-, n-Propyl- und/oder iso-Propyl-Substituenten und gegebenenfalls in weiteren ortho-Stellungen zu den Aminogruppen Methylsubstituenten aufweisen.

Beispiele geeigneter, bzw. bevorzugt geeigneter Diamine sind 2,4- und/oder 2,6-Diaminotoluol, 4,4'-Diaminodiphenylmethan, 2,4-Diaminomesitylen, 1,3,5-Triethyl-2,4-diaminobenzol, 1,3,5-Triisopropyl-2,4-diaminobenzol, 1-Methyl-3,5-diethyl-2,4-diaminobenzol, 1-Methyl-3,5-diethyl-2,6-diaminobenzol, 4,6-Dimethyl-2-ethyl-1,3-diaminobenzol, 3,5,3',5'-Tetraethyl-4,4'-diaminodiphenylmethyl, 3,5,3',5'-Tetraisopropyl-4,4'-diaminodiphenylmethan oder 3,5-Diethyl-3',5'-diisopropyl-4,4'-diaminodiphenylmethan.

Selbstverständlich können die genannten aromatischen Diamine auch im Gemisch angewendet werden. Besonders bevorzugt sind in diesem Zusammenhang 1-Methyl-3,5-diethyl-2,4-diaminobenzol oder eine Mischung aus diesem mit 1-Methyl-3,5-diethyl-2,8-diaminobenzol.

Geeignete Aminoalkohole (ii) sind einfache Aminoalkohole wie Aminoethanol, Aminopropanol, Diethanolamin, Triethanolamin oder auch niedermolekulare Alkoxylierungsprodukte von mindestens 2 N-H-Bindungen aufweisenden aminischen Startermolekülen wie z. B. die, gegebenenfalls Etherbrücken aufweisenden, Ethoxylierungs- bzw. Propoxylierungsprodukte von Ammoniak, Ethylendiamin oder Hexamethylendiamin.

Geeignete aliphatische Amine (iii) sind insbesondere einfache aliphatische Diamine mit primären Aminogruppen wie z. B. Ethylendiamin, 1,3-Diaminopropan, Hexamethylendiamin oder 1,2-Diaminopropan.

Geeignete niedermolekulare, mehrwertige Alkohole (iv) sind beispielsweise Ethylenglykol, 1,2- bzw. 1,3-Dihydroxypropan, 1,4-Dihydroxybutan, 1,6-Dihydroxyhexan, Trimethylolpropan, Glycerin, Pentaerythrit oder auch niedermolekulare, Ethergruppen aufweisende Polyole wie Diethylenglykol, Triethylenglykol oder Dipropylenglykol.

Die beispielhaft genannten aromatischen Diamine (i), gegebenenfalls im Gemisch mit einfachen Alkoholen der unter (iv) beispielhaft genannten Art, insbesondere mit Ethylenglykol, bzw. Butandiol-1,4 stellen die erfindungsgemäß bevorzugten Kettenverlängerungsmittel dar.

Die Art und die Mengenverhältnisse der Komponenten b1)-b3) werden im übrigen, wie bereits oben angedeutet, so gewählt, daß 0,2 - 100, vorzugsweise 2 - 50 und insbesondere 10 - 40 Äquivalentprozent aller gegenüber Isocyanatgruppen reaktionsfähiger Gruppen der Komponente b) unter Beachtung der oben genannten Einschränkung Ammoniumcarbamat-, -carbonat- und/oder -bicarbonatgruppen darstellen. Im übrigen kommen beim erfindungsgemäßen Verfahren vorzugsweise solche Abmischungen der Einzelkomponenten b1) - b3) zum Einsatz, in denen das Gewichtsverhältnis von b1) : b3), bzw. falls Verbindungen b2) mitverwendet werden, von (b1) + b2)) : b3) bei 1 : 1 bis 20 : 1, vorzugsweise 1,5 : 1 bis 10 : 1 und insbesondere von 2,5 : 1 bis 8 : 1 liegt.

Erfindungsgemäß geeignete Hilfs- und Zusatzmittel c) sind beispielsweise die sogenannten inneren Trennmittel des Standes der Technik. Bevorzugt sind innere Formtrennmittel, wie sie beispielsweise in DE-OS 1 953 637 (= US-PS 3 726 952), DE-OS 2 121 670 (= GB-PS 1 365 215), DE-OS 2 431 968 (= US-PS 4 098 731) bzw. in DE-OS 2 404 310 (= US-PS 4 058 492) beschrieben sind. Zu den bevorzugten Trennmitteln gehören die mindestens 25 aliphatische Kohlenstoffatome aufweisenden Salze von Fettsäuren mit mindestens 12 aliphatischen Kohlenstoffatomen und primären Mono-, Di- oder Polyaminen mit zwei und mehr Kohlenstoffatomen oder Amid- oder Estergruppen aufweisenden Aminen, die mindestens eine primäre, sekundäre oder tertiäre Aminogruppe besitzen, gesättigte und/oder ungesättigte COOH- und/oder OH-Gruppen aufweisende Ester von mono- und/oder polyfunktionellen Carbonsäuren und polyfunktionellen Alkoholen mit Hydroxyl- oder Säurezahlen von mindestens 5, esterartige Umsetzungsprodukte aus Ricinolsäure und langkettigen Fettsäuren, Polyricinolsäuren, Salze aus Carbonsäuren und tertiären Aminen sowie natürliche und/oder synthetische Öle, Fette oder Wachse.

Besonders bevorzugt ist das Ölsäure- oder Tallölfettsäuresalz des amidgruppenhaltigen Amins, das durch Umsetzung von N-Dimethylaminopropylamin mit Ölsäure oder Tallölfettsäure erhalten worden ist.

Neben diesen beispielhaft genannten, bevorzugt einzusetzenden Trennmitteln können prinzipiell beim erfindungsgemäßen Verfahren auch andere an sich bekannte Trennmittel des Standes der Technik allein oder im Gemisch mit den bevorzugten, beispielhaft genannten Trennmitteln eingesetzt werden. Zu diesen weiterhin geeigneten Trennmitteln gehören beispielsweise die Umsetzungsprodukte aus Fettsäureestern und Polyisocyanaten gemäß DE-OS 2 319 648, die Umsetzungsprodukte aus reaktionsfähige Wasserstoffatome aufweisenden Polysiloxanen mit Mono- und/oder Polyisocyanaten gemäß DE-OS 2 356 692 (= US-PS 4 033 912), Ester von Hydroxymethylgruppen aufweisenden Polysiloxanen mit Mono- und/oder Polycarbonsäuren gemäß DE-OS 2 363 452 (= US-PS 4 024 090) und Salze aus Aminogruppen enthaltenden Polysiloxanen und Fettsäuren gemäß DE-OS 2 427 273 oder DE-OS 2 431 968 (US-PS 4 098 731).

Die genannten inneren Formtrennmittel werden, falls überhaupt, in einer Menge von insgesamt 0,1 bis 25 Gew.-%, vorzugsweise 1 bis 10 Gew.-%, bezogen auf das gesamte Reaktionsgemisch, eingesetzt.

Obwohl für die Herstellung der Formkörper, insbesondere bei Verwendung von hochreaktiven Hydroxylgruppenfreien Komponenten b) und darüber hinaus bei Einsatz der bevorzugten Formtrennmittel c) keine Katalysatoren für die Reaktion zwischen Isocyanat- und gegenüber Isocyanatgruppen reaktionsfähigen Gruppen eingesetzt werden müssen, können die Katalysatoren, die in bekannter Weise bei der Herstellung von Polyurethanschaumstoffen und mikrozellularen Elastomeren eingesetzt werden, als weitere Hilfs- bzw. Zusatzmittel c) mitverwendet werden.

Als mitzuverwendende Katalysatoren kommen tertiäre Amine der an sich bekannten Art in Frage, z. B.:
Triethylamin, Tributylamin, N-Methylmorpholin, N-Ethylmorpholin, N,N,N',N'-Tetramethylethylendiamin, 1,4-Diazabicyclo-(2,2,2)-octan, N-Methyl-N'-dimethylaminoethylpiperazin, N,N-Dimethylbenzylamin, Bis-(N,N-diethylaminoethyl)-adipat, N,N-Diethylbenzylamin, Pentamethyldiethylentriamin, N,N-Dimethylcyclohexylamin, N,N,N',N'-Tetramethyl-1,3-butandiamin, N,N-Dimethylimidazol-ß-phenylethylamin, 1,2-Dimethylimidazol und 2-Methylimidazol.

Auch organische Metallkatalysatoren, insbesondere organische Zinnkatalysatoren, wie z. B. Zinn-(II)-salze von Carbonsäuren wie Zinn-(II)-acetat, Zinn-(II)-octoat, Zinn-(II)-ethylhexoat und Zinn-(II)-laurat und die Dialkylzinnsalze von Carbonsäuren, wie z. B. Dibutylzinndiacetat, Dibutyl-zinndilaurat, Dibutyl-zinnmaleat oder Dioctylzinndiacetat können allein oder in Kombination mit den tertiären Aminen verwendet werden. Weitere Vertreter von Katalysatoren sowie Einzelheiten über die Wirkungsweise der Katalysatoren sind im Kunststoff-Handbuch, Band VII, herausgegeben von Vieweg & Höchtlen, Carl-Hanser-Verlag, München 1966, z. B. auf den Seiten 96 bis 102 beschrieben.

Die Katalysatoren werden, falls überhaupt, in einer Menge von etwa 0,001 und 10 Gew.-%, vorzugsweise 0,05 bis 1 Gew.-%, bezogen auf die Komponente b), eingesetzt.

Beim erfindungsgemäßen Verfahren können auch zusätzlich noch Treibmittel als weitere Komponente c) eingesetzt werden.

So können zusätzlich als Treibmittel über das zur Herstellung der Carbonate notwendige Maß hinaus Wasser (welches gleichzeitig die Rolle eines Kettenverlängerungsmittels über Harnstoffbildung übernimmt) und/oder leicht flüchtige organische Substanzen und/oder gelöste inerte Gase verwendet werden.

Als organische Treibmittel kommen z. B. Aceton, Ethylacetat, Methanol, Ethanol, halogensubstituierte Alkane wie Dichlormethan, Trichlormethan, Vinylidenchlorid, Monofluortrichlormethan, Chlordifluormethan, Dichlordifluormethan, ferner Butan, Hexan, Heptan oder Diethylether in Frage.

Geeignete inerte Gase sind z. B. Stickstoff oder Luft.

Eine zusätzliche Treibwirkung kann auch durch Zusatz von bei Temperaturen über Raumtemperatur unter Abspaltung von Gasen, beispielsweise von Stickstoff, sich zersetzenden Verbindungen, z. B. Azoverbindungen wie Azoisobuttersäurenitril, erzielt werden. Weitere Beispiele für Treibmittel sowie Einzelheiten über die Verwendung von Treibmittel sind im Kunststoff-Handbuch, Band VII, herausgegeben von Vieweg und Höchtlen, Carl-Hanser-Verlag, München 1966, z. B. auf den Seiten 108 und 109, 453 und 455 und 507 bis 510, beschrieben. Vorzugsweise wird das erfindungsgemäße Verfahren jedoch ohne Mitverwendung der beispielhaft genannten klassischen Treibmittel der Polyurethanschaumchemie durchgeführt.

Als Schaumstabilisatoren kommen vor allem wasserlösliche Polyethersiloxane in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z. B. in der US-PS 2 764 565 beschrieben.

Als weitere Hilfs- und Zusatzmittel, die gegebenenfalls beim erfindungsgemäßen Verfahren mitverwendet werden, seien auch Zellregler der an sich bekannten Art, wie z. B. Paraffine oder Fettalkohole oder Dimethylpolysiloxane, sowie Pigmente oder Farbstoffe und Flammschutzmittel der an sich bekannten Art, z. B. Trichlorethylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Glasfaser, Kieselgur oder Schlämmkreide genannt. Als Füllstoff besonders bevorzugt werden Glasfasern.

Weitere Beispiele von gegebenenfalls erfindungsgemäß mitzuverwendenden oberflächenaktiven Zusatzstoffen und Schaumstabilisatoren, flammhemmenden Substanzen, Weichmachern, Farbstoffen und Füllstoffen, fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z. B. auf den Seiten 103 bis 113, beschrieben.

Bei der Durchführung des erfindungsgemäßen Verfahrens wird die Menge der Komponente a) (Polyisocyanatkomponente) so bemessen, daß im schaumfähigen Gemisch eine Isocyanat-Kennzahl von 70 bis 130, insbesondere 90 bis 110, vorliegt. Unter Isocyanat-Kennzahl versteht man hierbei den Quotienten aus Anzahl der Isocyanatgruppen und Anzahl der gegenüber Isocyanaten reaktiven Gruppen, multipliziert mit 100. In die Berechnung der Isocyanat-Kennzahl gehen hierbei die gegebenenfalls in den Trennmitteln vorliegenden, gegenüber Isocyanatgruppen reaktionsfähigen Gruppen (Carboxylgruppen) nicht ein. Die Ammoniumcarbamatgruppen gehen in die Berechnung der Isocyanat-Kennzahl als difunktionelle Gruppen ein.

Bei dem erfindungsgemäßen Verfahren werden die Ausgangsmaterialien einstufig in geschlossenen Formen, beispielsweise geschlossenen Metall- oder Kunststoff-Formen miteinander zur Umsetzung gebracht. Hierbei kommen zwei Reaktionskomponenten zum Einsatz, wobei die Polyisocyanatkomponente a) die erste und die Komponente mit gegenüber Isocyanatgruppen reaktionsfähigen Gruppen, d.h. die Komponente b), d.h. die Komponente b1) gegebenenfalls in Abmischung mit den Komponenten b2) und/oder b3) die zweite Reaktionskomponente darstellen. Die gegebenenfalls mitzuverwendenden Komponenten c) werden im allgemeinen der Komponente b) zugemischt, jedoch kann es auch zweckmäßig sein, beispielsweise bei der Verwendung von Isocyanatgruppen aufweisenden Trennmitteln, diese vor der Durchführung des erfindungsgemäßen Verfahrens der Komponente a) einzuverleiben. Die Menge des in die Form eingebrachten, gegebenenfalls schäumfähigen Gemischs wird im übrigen so bemessen, daß die Formkörper eine Dichte von 0,1 - 1,4 g/m³, vorzugsweise 0,6 - 1,1 g/cm³ aufweisen. Insbesondere bei der Mitverwendung von mineralischen Füllstoffen können Formkörper mit einer über 1,0 g/cm³ liegenden Dichte resultieren. Die im allgemeinen eine homogene, weitgehend fehlerlose Oberfläche aufweisenden Formkörper können nach einer Formstandzeit von 5 bis 300, vorzugsweise 10 bis 120 Sekunden entformt werden. Als Ausgangstemperatur des in die Form eingebrachten Gemischs wird im allgemeinen eine Temperatur zwischen 10 und 60°C, vorzugsweise 20 bis 50°C, gewählt. Die Temperatur der Form beträgt im allgemeinen 40 bis 100°C, vorzugsweise 50 bis 70°C.

Die Frage, ob beim erfindungsgemäßen Verfahren Schaumstoffe mit geschlossener Außenhaut, d.h. Formkörper einer unter 0,6 g/cm³ liegenden Rohdichte oder mikrozellulare Formkörper, d.h. solche einer über 0,6 g/cm³ liegenden Rohdichte resultieren, hängt von der Menge der im Reaktionsgemisch vorliegenden "Kohlensäuresalze", der Menge der mitverwendeten Treibmittel und der Menge des in die Form eingebrachten Reaktionsgemischs ab. Die rRohdichte der Formkörper kann somit durch geeignete Variation dieser Variablen eingestellt werden. Vorzugsweise befolgt die Verarbeitung nach der bekannten Reaktionsspritzgußtechnik (RSG-Verfahren). Es handelt sich hierbei um eine Fülltechnik, bei der die hochaktiven, flüssigen Ausgangskomponenten über Hochdruckdosieraggregate mit großer Austragsleistung nach Vermischen in sogenannten zwangsgesteuerten Mischköpfen in kürzester Zeit in die Form eingespritzt werden. Einer der Vorteile des erfindungsgemäßen Verfahrens ist in dem Umstand begründet, daß die erfindungswesentlichen "Kohlensäuresalze" sofort nach Durchmischung der Reaktionskomponenten durch Freisetzung des Kohlendioxids ihre Treibwirkung entfalten, so daß auch in industrieller Serienproduktion von Polyurethan- bzw. Polyharnstoff-Formteilen bei Formstandzeiten von weniger als 1 Minute zellförmige Formkörper erhalten werden können, wohingegen die klassischen Treibmittel (Fluorkohlenwasserstoffe bzw. Wasser) ihre Treibwirkung so langsam entfalten, daß hoch reaktive Systeme der genannten Art mit Hilfe dieser Treibmittel nicht in feinporige Formkörper einer um mehr als 20 % herabgesetzten Dichte überführt werden können. Ein weiterer Vorteil der Mitverwendung der erfindungsgemäßen "Kohlensäuresalze" ist in dem Umstand zu sehen, daß sie die Herstellung von elastomeren Formkörpern in problemloser Serienfertigung gestattet, wobei auch dünnwandige Formteile ohne Anwendung externer Trennmittel problemlos entformt werden können. In den früher zur Anwendung gelangten Systemen führte selbst die Mitverwendung der klassischen, oben beispielhaft offenbarten inneren Formtrennmittel bei der Herstellung von elastomeren Formteilen bestenfalls zu einer geringfügigen Verbesserung der selbsttrennenden Eigenschaften, so daß der Einsatz äußerer Formtrennmittel unverzichtbar war. Die erfindungsgemäße Kombination der bekannten inneren Trennmittel mit den erfindungswesentlichen "Kohlensäuresalzen" ermöglicht es jedoch, auf die Mitverwendung äußerer Trennmittel völlig zu verzichten. Ein weiterer Vorteil der erfindungswesentlichen "Kohlensäuresalze" ist in dem Umstand zu sehen, daß ihre Mitverwendung bei der Herstellung von Integralformstoffen bereits in äußerst geringer Konzentration eine wesentliche Verbesserung der Oberfläche der Formteile bewirken, dank derer beispielsweise nach der Tauchlackierung keinerlei Unregelmäßigkeiten mehr zu erkennen sind.

Das erfindungsgemäße Verfahren eignet sich insbesondere zur Herstellung von hochwertigen, elastomeren, mikrozellularen Formkörpern, die beispielsweise als Karosserieteile in der Automobilindustrie eingesetzt werden können. Durch geeignete Variationen der Ausgangsverbindungen, insbesondere bei relativ geringem Anteil an Diaminen in der Komponente b3) können aber zum Beispiel auch flexible Schuhsohlen mit gutem Abriebverhalten und ausgezeichneter mechanischer Festigkeit erhalten werden. Das erfindungsgemäße Verfahren eignet sich darüber hinaus bei geeigneter Wahl der Ausgangsverbindungen und deren Mengenverhältnissen zur Herstellung von harten mikrozellularen Formkörpern oder zur Herstellung von weichen bis harten Integralformstoffen.

Reaktionsgemische der erfindungsgemäß einzusetzenden Art können auch zur Herstellung von beliebigen, frei verschäumten Schaumstoffen eingesetzt werden. So eignen sich die schaumfähigen Gemische beispielsweise auch zur Beschichtung von Stegen und von Profilen.

In den nachfolgenden Beispielen beziehen sich alle Prozentangaben, soweit nichts anderslautendes angemerkt, auf Gewichtsprozente.

## Beispiele

In den nachfolgenden Beispielen werden folgende Komponenten b1) ("Kohlensäuresalze") eingesetzt (die Wassermenge wird bei der Herstellung der Kohlensäuresalze jeweils so bemessen, daß ausschließlich eine Modifizierung der Aminogruppen unter Bicarbonat- bzw. Carbonatbildung erfolgt):

## Kohlensäuresalz I

In ein Gemisch aus 52,6 g Wasser und 450 g eines handelsüblichen Aminopolyethers (Jeffamine[R] T 403 der Firma Jefferson Chemical Company, Inc.) des mittleren Molekulargewichts 438, der das Propyoxylierungsprodukt von Trimethylolpropan mit endständigen Aminogruppen darstellt (6,75 Milliäquivalente pro g an gegenüber Isocyanatgruppen reaktionsfähigen Gruppen, davon 6,16 Milliäquivalente pro g primäre Aminogruppen bei einem Gesamtgehalt an Aminstickstoff von 6,45 Milliäquivalenten) wird bei Raumtemperatur unter Rühren bis zur Sättigung gasförmiges Kohlendioxid eingeleitet. Anschließend wird während 1 h nachgerührt. Durch Auswiegen des Umsetzungsprodukts wird eine Gewichtszunahme von 63 g festgestellt. Dies entspricht 1,43 Mol Kohlendioxid. Demzufolge liegen mindestens 49 % der Aminogruppen in modifizierter Form vor (hypothetische Annahme der ausschließlichen Bildung von Bicarbonatgruppen).

### Kohlensäuresalz II

In ein Gemisch aus 12,6 g Wasser und 700 g eines handelsüblichen Aminopolyethers (Jeffamine$^{(R)}$ D 2000) des mittleren Molekulargewichts 2000, der ein lineares Polypropylenoxid mit endständigen primären Aminogruppen darstellt (1.01 Milliäquivalente pro g an gegenüber Isocyanatgruppen reaktionsfähigen Gruppen, davon 0,95 Milliäquivalente pro g primäre Aminogruppen bei einem Gesamtaminstickstoffgehalt von 0,96 Milliäquivalenten) wird unter Rühren bei Raumtemperatur Kohlendioxid bis zur Sättigung eingeleitet. Das Gemisch erwärmt sich hierbei auf ca. 30°C. Anschließend wird während 1 h nachgerührt. Durch Auswiegen kann eine Gewichtszunahme von 20 g (455 mmol $CO_2$) festgestellt werden. Demnach sind mindestens 65 % der ursprünglich vorgelegenen basischen Aminogruppen in Kohlensäuresalz-Gruppen überführt worden.

### Kohlensäuresalz III

6,2 g Wasser und 700 g eines Aminopolyethers des mittleren Molekulargewichts 5600, der durch Umsetzung des Additionsproduktes von Propylenoxid an Trimethylolpropan mit Ammoniak in Gegenwart von Wasserstoff und Raney-Nickel hergestellt worden ist, dessen gegenüber Isocyanatgruppen reaktionsfähigen Endgruppen zu mehr als 90 Äquivalentprozent aus primären Aminogruppen und zu weniger als 1 Äquivalentprozent aus sekundären Hydroxylgruppen bestehen, und dessen Gehalt an Basen-Stickstoff 0,69 % beträgt (HCl-Titration), wird bei Raumtemperatur unter Rühren Kohlendioxid eingeleitet. Nach Sättigung mit Kohlendioxid wird während 1 h nachgerührt. Es wurden so insgesamt ca. 11,4 g Kohlendioxid aufgenommen. Hieraus folgt, daß mindestens ca. 75 % der vorliegenden Aminogruppen in Kohlensäuresalz-Gruppen überführt worden sind.

### Kohlensäuresalz IV

Der zur Herstellung des Kohlensäuresalz III verwendete Aminopolyether wird durch Behandlung mit Acrylnitril in Gegenwart von Kaliumhydroxid bei 80°C so modifiziert, daß bei einem Gesamt-Basenstickstoffgehalt von 1,37 % ein Gehalt an primärem Stickstoff von 0,92 %, an sekundärem Stickstoff von 0,45 % und an tertiärem Stickstoff von 0,01 % resultiert.

2160 g des so modifizierten Aminopolyethers (2,11 Mol Basen-Stickstoff) werden mit 38 g Wasser (2,11 Mol) vermischt und in diese Mischung unter Rühren bei Raumtemperatur gasförmiges Kohlendioxid eingeleitet. Nach Sättigung des Gemischs wurde noch während 1 h nachgerührt. Insgesamt wurden auf diese Weise 30,2 l Kohlendioxid gebunden. Hieraus ergibt sich, daß mindestens 64 % aller Aminogruppen in Kohlensäuresalz-Gruppen überführt worden sind.

### Kohlensäuresalz V

762 g 50 %ige Kalilauge (2,4 Mol KOH) werden mit 1 l Wasser verdünnt und in einem geeigneten, mit Rührer, Thermometer, Rückflußkühler und Tropftrichter versehenen Gefäß vorgelegt. Innerhalb von 40 Min. wird dazu 1 kg eines Prepolymers des NCO-Gehalts 5,03 % (1,2 Mol NCO) bei einer Innentemperatur von 32 - 36°C gegeben. Dieses Prepolymer wurde durch Umsetzung von Hexamethyldiisocyanat und Polypropylenglykol der OH-Zahl 112 im NCO : OH-Verhältnis 12 : 1 und nachfolgender destillativer Entfernung des überschüssigen, monomeren Isocyanats in einem Dünnschichtverdampfer hergestellt.

30 Min. wird bei einer Innentemperatur von ca. 30°C nachgerührt. Bei der Zugabe des NCO-Prepolymeren zur verdünnten Kalilauge muß gekühlt werden. Anschließend werden 59 g Dimethylformamid zugesetzt und für 30 Min. auf 60 - 75°C erwärmt. Dabei entweicht Dimethylamin. Nach dem Abkühlen auf 20°C wird die entstehende untere Phase abgetrennt und die obere Phase mit 500 ml Dioxan versetzt, abfiltriert und eingeengt. Das entstandene Produkt weist einen Gehalt an Basen-Stickstoff von 1,57 % (theor. 1,73 %) auf, die Ausbeute beträgt 99 %.

In 610 g (enthält 0,68 Mol Basen-Stickstoff) dieses urethanmodifizierten Polyetheramins, die mit 6,2 g (0,342 Mol) Wasser vermischt worden waren, wird bei 60°C gasförmiges Kohlendioxid bis zur Sättigung eingeleitet. Insgesamt werden 8 l (ca. 0,36 Mol) Kohlendioxid aufgenommen. Demzufolge liegen mindestens 53 % der Aminogruppen in modifizierter Form vor.

### Kohlensäuresalz VI

In ein Gemisch aus 32 g Wasser und 250 g eines handelsüblichen Aminopolyethers (JEFFAMINE$^{(R)}$ D 400) des mittleren Molekulargewichts 400, der ein lineares Polypropylenoxid mit endständigen primären Aminogruppen

10

darstellt (5,17 Milliäquivalente pro g an gegenüber Isocyanatgruppen reaktionsfähigen Gruppen, davon 4,93 Milliäquivalente pro g primäre Aminogruppen bei einem Gesamtaminstickstoffgehalt von 4,99 Milliäquivalenten pro g) wird unter Rühren gasförmiges Kohlendioxid bis zur Sättigung eingeleitet. Dabei steigt die Innentemperatur von Raumtemperatur auf 46°C an. Nach der Sättigung des Gemischs mit Kohlendioxid wird noch während einer Stunde bei Raumtemperatur nachgerührt. Insgesamt wurden 0,58 Mol Kohlendioxid aufgenommen. Hieraus folgt, daß mindestens 46 % der Aminogruppen in modifizierter Form vorliegen.

**Beispiele**

Die Verarbeitung der in den folgenden Beispielen 1 - 13 beschriebenen Rezepturen erfolgte mit Hilfe der Reaktionsspritzgußtechnik oder englisch "reaction injection moulding" (RIM).

Die Polyisocyanatkomponente und die alle übrigen Bestandteile enthaltende Gegenkomponente wurde einem Hochdruckdosieraggregat zugeführt und nach intensiver Vermischung in einem zwangsgesteuerten Mischkopf in kürzester Zeit in ein 60°C heißes Metallwerkzeug gedrückt.

Als Formwerkzeug wurde in den Beispielen 1 - 7 eine geschlossene Aluminiumform der Abmessung 4 x 120 x 400 mm, in den Beispielen 8 - 13 eine solche der Abmessung 10 x 200 x 200 mm verwendet, deren Innenwände mit einem handelsüblichen Trennmittel auf Wachsbasis besprüht worden sind.

**Beispiel 1** (Vergleichsbeispiel)

77 Gew.-Teile eines Polyetherpolyols der OH-Zahl 28, hergestellt durch Propoxylierung von Trimethylolpropan und anschließende Ethoxylierung des Propoxylierungsprodukts (Gewichtsverhältnis PO:EO = 85 : 15) werden mit 23 Gew.-Teilen einer Mischung aus 65 Gew.-Teilen 1-Methyl-3,5-diethyl-2,4-diaminobenzol und 35 Gew.-Teilen 1-Methyl-3,5-diethyl-2,6-diaminobenzol, sowie 0,1 Gew.-Teilen Triethylendiamin und 0,1 Gew.-Teilen Dibutylzinn-dilaurat zu einer "Polyolkomponente" vereinigt.

Diese Polyolkomponente wird mit 57 Gew.-Teilen eines Polyisocyanatgemischs des NCO-Gehalts von 24,5 % zur Reaktion gebracht. Dieses Polyisocyanatgemisch wurde vorab durch Umsetzung eines Polyisocyanatgemischs der Diphenylmethan-Reihe bestehend aus 82 Gew.-Teilen 4,4'-Diisocyanatodiphenylmethan, 8 Gew.-Teilen 2,4'-Diisocyanatodiphenylmethan und 10 Gew.-Teilen tri- und höherfunktionellen Polyisocyanaten der Diphenylmethan-Reihe mit Dipropylenglykol hergestellt. Die Ausgangsmaterialien in diesem Beispiel und in den Beispielen 2 - 7 wurden vor Befüllen der Form auf 40°C erwärmt. Die Formstandzeit beträgt in den Beispielen 1 - 7 jeweils 3 Minuten.

In Tabelle 1 sind die Rezepturen der Beispiele 1 - 7 zusammengefaßt. In Tabelle 2 werden die mechanischen Daten der erhaltenen massiven bzw. mikrozellularen Elastomeren angegeben.

**Beispiel 2**

Beispiel 2 unterscheidet sich vom Vergleichsbeispiel 1 durch einen teilweise Ersatz des Polyols durch die Kohlensäuresalze I und II. Es wird ein mikrozellularer Formkörper mit ausgezeichneten mechanischen Eigenschaften erhalten.

**Beispiele 3 und 4**

Die Beispiele 3 und 4 unterscheiden sich vom Vergleichsbeispiel 1 durch den Ersatz des Teils des Polyetherpolyols durch das Kohlensäuresalz II. In Beispiel 3 sind dies 5, in Beispiel 4 10 Gew.-Teile.

Ein Vergleich der mechanischen Daten der Beispiele 1 und 3 zeigt, daß der leicht angeschäumte Formkörper gemäß Beispiel 3 deutlich bessere mechanische Eigenschaften aufweist (Biegemodul und Zugfestigkeit deutlich erhöht).

**Beispiele 5 und 6**

Die Beispiele 5 und 6 unterscheiden sich vom Vergleichsbeispiel 1 durch einen teilweisen Ersatz des Polyetherpolyols durch das Kohlensäuresalz III. In Beispiel 5 sind dies 10, in Beispiel 6 30 Gew.-Teile.

Wie aus Tabelle 2 ersichtlich, zeigt sich auch hier, daß der leicht angeschäumte Formkörper (Beispiel 5) erstaunlich gute mechanische Eigenschaften aufweist. Aus den Beispielen 4 und 6 geht hervor, daß die Mitverwendung der erfindungswesentlichen Kohlensäuresalze eine deutliche Erniedrigung der Rohdichte ermöglicht. Trotz der niedrigeren Rohdichten weisen die entsprechenden Formkörper gute mechanische Eigenschaften auf.

**Beispiel 7**

Beispiel 7 unterscheidet sich vom Vergleichsbeispiel 1 durch die aus Tabelle 1 ersichtliche Mitverwendung der Kohlensäuresalze III und VI. Auch hier zeigt sich, wie aus Tabelle 2 ersichtlich, daß die mechanischen Werte trotz der niedrigeren Rohdichten überraschend hoch liegen.

**Tabelle 1**

Rezepturen der Beispiele 1 - 7

| Beispiel (Zahlenangaben in Gewichtsteilen) | 1 | 2 | 3 | 4 | 5 | 6 | 7 |
|---|---|---|---|---|---|---|---|
| Polyol | 77 | 55 | 72 | 67 | 67 | 47 | 47 |
| Kohlensäuresalz I | - | 2 | - | - | - | - | - |
| Kohlensäuresalz II | - | 5 | 5 | 10 | - | - | - |
| Kohlensäuresalz III | - | - | - | - | 10 | 30 | 10 |
| Kohlensäuresalz VI | - | - | - | - | - | - | 2 |
| Amin-Vernetzer | 23 | 23 | 23 | 23 | 23 | 23 | 23 |
| Triethylendiamin | 0,1 | 0,1 | 0,1 | 0,1 | 0,1 | 0,1 | 0,1 |
| Zinnkatalysator | 0,1 | 0,1 | 0,1 | 0,1 | 0,1 | 0,1 | 0,1 |
| Polyisocyanat | 57 | 57 | 57,5 | 58 | 57 | 57 | 57 |

**Tabelle 2**

Mechanische Daten der Beispiele 1 - 7

| Beispiele | 1 | 2 | 3 | 4 | 5 | 6 | 7 |
|---|---|---|---|---|---|---|---|
| Rohdichte (DIN 53420) [kg/m$^3$] | 1100 | 800 | 1050 | 830 | 1050 | 650 | 730 |
| Shore D-Härte (DIN 53505) | 65 | 47 | 61 | 50 | 61 | 39 | 45 |
| Biege-E-Modul (ASTM-d-790-71) [MPa] | 330 | 300 | 380 | 260 | 370 | 190 | 210 |
| Zugfestigkeit (DIN 53505) [MPa] | 17,6 | 19,6 | 28,5 | 12,1 | 32,5 | 8,8 | 14,1 |
| Bruchdehnung | 220 | 190 | 230 | 170 | 250 | 150 | 200 |

**Beispiel 8** (Vergleichsbeispiel)

Herstellung eines weichen Integralschaumstoffes.

95 Gew.-Teile des Polyetherpolyols gemäß Beispiel 1, 5 Gew.-Teile Ethylenglykol, 0,4 Gew.-Teile Wasser, 0,35 Gew.-Teile Triethylendiamin, 0,5 Gew.-Teile permethyliertes Ethylendiamin und 8 Gew.-Teile Trichlorfluoromethan werden zu einer "Polyolkomponente" vereinigt. Die so hergestellte Polyolkomponente wird dann in der oben beschriebenen Metallform mit 28 Gew.-Teilen einer Polyisocyanatkomponente zu einem weichen Integralschaumstoff der nachstehend genannten mechanischen Eigenschaften umgesetzt. Als Polyisocyanatkomponente diente ein Gemisch aus 10 Gew.-Teilen 2,4'-Diisocyanatodiphenyl-methan, 75 Gew.-Teilen 4,4'-Diisocyanatodiphenylmethan, und 15 Gew.-Teilen tri- und höherfunktionellen Polyisocyanaten der Diphenylmethanreihe. Die Temperatur des in die Form eingebrachten Reaktionsgemischs beträgt 40° C.

Mechanische Eigenschaften des weichen Integralschaumstoffes mit kompakter Außenhaut:

| Rohdichte (DIN 53420) | 120 | kg/m³ |
|---|---|---|
| Zugfestigkeit (DIN 53571) | 150 | kPa |
| Bruchdehnung (DIN 53571) | 130 | % |
| Stauchhärte (DIN 53577) | 15 | kPa |

Die Außenhaut des Formschaumstoffs weist deutlich sichtbare Schlieren auf, was auf eine mangelhafte Durchmischung der Reaktionskomponenten schließen läßt. Ferner tritt eine schwache Markierung der Einfüllhöhe (Liegezone) des schäumfähigen, flüssigen Reaktionsgemischs auf.

**Beispiel 9**

Beispiel 8 wird wiederholt, mit dem einzigen Unterschied, daß 10 Gew.-Teile des Polyetherpolyols durch 10 Gew.-Teile Kohlensäuresalz II ersetzt werden. Das Gemisch schäumt jetzt sofort auf, so daß weder Schlieren noch Liegezonenmarkierungen des resultierenden Formkörpers bei ansonsten praktisch unveränderten Eigenschaften des Formteils auftreten. Die gleichen guten Ergebnisse werden dann erhalten, wenn anstelle der 10 Gew.-Teile des Kohlensäuresalzes II 10 Gew.-Teile des Kohlensäuresalzes IV bzw. 8 Gew.-Teile des Kohlensäuresalzes V eingesetzt werden.

**Beispiel 10**

Herstellung eines elastomeren, mikrozellularen Formkörpers

55 Gew.-Teile Kohlensäuresalz II werden mit 18,3 Gew.-Teilen des Polyetherpolyols gemäß Beispiel 1, 22 Gew.-Teilen des Diamingemischs gemäß Beispiel 1, 0,14 Gew.-Teilen Dibutylzinndilaurat, 0,1 Gew.-Teilen Triethylendiamin, 4,5 Gew.-Teilen des stöchiometrischen Tallölfettsäuresalzes aus einem Mol Tallölfettsäure und einem Mol Amidamin, hergestellt aus einem Mol 1-Amino-3-(dimethylamino)-propan und einem Mol Tallölfettsäure, zu einer "Polyaminkomponente" vereinigt. Anschließend werden 40 Gew.-Teile einer gemahlenen Glasfaser der mittleren Länge von 0,2 mm zu der Polyaminkomponente zugegeben und das so erhaltene Gemisch mit 60,5 Gew.-Teilen eines Umsetzungsprodukts aus Tripropylenglykol und 4,4'-Diisocyanatodiphenylmethan (NCO-Gehalt: 23 %) in der obengenannten Metallform zu einem elastomeren Formkörper verarbeitet. Die in die Form eingetragenen Ausgangsmaterialien wurden vorab auf 40°C erwärmt. Die Formstandzeit beträgt 1 Minute.

Der resultierende Formkörper weist folgende Eigenschaften auf:

| Rohdichte (DIN 53420) | 870 | kg/m³ |
|---|---|---|
| Zugfestigkeit (DIN 53504) | 25 | MPa |
| Bruchdehnung (DIN 53504) | 260 | % |
| Weiterreißfestigkeit mit Schnitt (DIN 53515) | 56 | kN/m |
| Shore-D-Härte (DIN 53505) | 47 | |
| Biegemodul (ASTM-D 790-71) | 630 | MPa |

**Beispiel 11**

Herstellung eines integralen Hartschaumstoffes

50 Gew.-Teile eines tetrafunktionellen Vernetzers der OH-Zahl 790, hergestellt durch Propoxylierung von Ethylendiamin, 40 Gew.-Teile Kohlensäuresalz III, 10 Gew.-Teile des Diamingemischs gemäß Beispiel 1, 6 Gew.-Teile eines Emulgators, hergestellt durch Reaktion von 2 Mol Ölsäure mit 1 Mol 1-Amino-3-(dimethyl-amino)-propan und 0,1 Gew.-Teile Triethylendiamin werden unter Verwendung der obengenannten Metallform mit 145 Gew.-Teilen eines Polyisocyanatsgemischs zu einem harten Integralschaumstoff der nachstehend genannten mechanischen Eigenschaften umgesetzt. Als Polyisocyanatkomponente diente ein Gemisch gleicher Gewichtsteile

a) des in Beispiel 1 genannten, modifizierten Polyisocyanatgemischs und

b) eines Polyisocyanatgemischs der Diphenylmethanreihe mit einem Gehalt an Diisocyanatodiphenylmethan-Isomeren von 59,7 %, einem Gehalt an trifunktionellen Polyisocyanaten der Diphenylmethanreihe von 21,3 % und einem Gehalt an höherfunktionellen Polyisocyanaten der Diphenylmethanreihe von 19 %.

13

Der NCO-Gehalt des Gesamtgemischs liegt bei 28 %, seine Viskosität bei ca. 130 mPa.s/25°C. Die Temperatur des in die Form eingebrachten Reaktionsgemischs liegt bei 40°C, die Formstandzeit beträgt 3 Minuten.

Mechanische Werte:

| | | |
|---|---|---|
| Rohdichte (DIN 53420) | 840 | kg/m$^3$ |
| Wärmebiegewert (f = 10 mm, DIN 53424) | 160° | C |
| Biege-E-Modul (ASTM D 790-71) | 1230 | MPa |
| Shore-p-Härte (DIN 53505) | 76 | |

**Beispiel 12**

Halbharter Integralschaumstoff

90 Gew.-Teile eines Polyesterdiols der OH-Zahl 56 aus Adipinsäure, 1,4-Dihydroxybutan und Ethylenglykol, 14 Gew.-Teile 1,4-Dihydroxybutan, 0,4 Gew.-Teile Wasser, 0,5 Gew.-Teile Triethylendiamin und 2 Gew.-Teile Kohlensäuresalz II werden zu einer "Polyolkomponente" vereinigt. Die so hergestellte Polyolkomponente wird in der obengenannten Metallform mit 52 Gew.-Teilen eines NCO-Prepolymeren des NCO-Gehalts 19 % aus 4,4'-Diisocyanatodiphenylmethan und dem genannten Polyesterdiol der OH-Zahl 56 zu einem halbharten Polyurethan-Integralschaumstoff verarbeitet. Die Temperatur des in die Form eingebrachten Reaktionsgemischs beträgt 40°C. Die Formstandzeit beträgt 3 Minuten.

Mechanische Eigenschaften:

| | | |
|---|---|---|
| Rohdichte (DIN 53420) | 550 | kg/m$^3$ |
| Shore A-Härte (DIN 53505) | 60 | |
| Zugfestigkeit (DIN 53504) | 9 | MPa |
| Bruchdehnung (DIN 53504) | 500 | % |
| Weiterreißfestigkeit (DIN 53507) | 14 | KN/m |

Der Zusatz des Kohlensäuresalzes bewirkt eine wesentliche Verbesserung der Oberfläche des Formkörpers, dank derer nach der Tauchlackierung keine Liegezonenmarkierungen mehr zu erkennen sind.

**Beispiel 13**

Halbharter Polyurethan-Integralschaumstoff

80 Gew.-Teile eines Polyetherdiols der OH-Zahl 28, das durch Propoxylierung von 1,2-Dihydroxypropan und anschließende Ethoxylierung des Propoxylierungsprodukts erhalten worden ist (Gewichtverhältnis PO:EO = 85: 15), 20 Gew.-Teile des Polyetherpolyols der OH-Zahl 28 gemäß Beispiel 1, 8 Gew.-Teile des Diamingemisches gemäß Beispiel 1, 0,2 Gew.-Teile Triethylendiamin, 0,15 Gew.-Teile Dibutylzinndilaurat, 10 Gew.-Teile Trichlorfluormethan und 10 Gew.-Teile Kohlensäuresalz II werden zu einer "Polyolkomponente" vereinigt. Unter Verwendung der obengenannten Metallform wird diese Polyolkomponente mit 36 Gew.-Teilen eines Umsetzungsprodukts von 4,4'-Diisocyanatodiphenylmethan mit Tripropylenglykol, das einen NCO-Gehalt von 23 % aufweist, zu einem halbharten Integralschaumstoff verarbeitet. Die Temperatur der in die Form eingebrachten Ausgangsmaterialien liegt bei 28°C. Die Formstandzeit beträgt 2 Minuten.

Mechanische Eigenschaften:

| | | |
|---|---|---|
| Rohdichte (DIN 53420) | 700 | kg/m$^3$ |
| Shore-A-Härte (DIN 53505) | 60 | |
| Zugfestigkeit (DIN 53504) | 5 | Mpa |
| Bruchdehnung (DIN 53504) | 450 | % |
| Weiterreißfestigkeit (DIN 53507) | 14 | KN/m |

**Patentansprüche**

1. Verfahren zur Herstellung von mikrozellularen oder geschäumten Formkörpern auf Polyharnstoff-Basis durch Umsetzung in geschlossenen Formen eines Reaktionsgemischs aus

a) einer Polyisocyanat-Komponente, bestehend aus mindestens einem Di- oder Polyisocyanat mit ausschließlich aromatisch gebundenen Isocyanatgruppen,

b) mindestens einer Verbindung mit gegenüber Isocyanatgruppen reaktionsfähigen Gruppen und

c) gegebenenfalls den in der Polyurethanchemie an sich bekannten Hilfs- und Zusatzmitteln,

nach dem one-shot-System unter Einhaltung einer NCO-Kennzahl von 70 bis 130, wobei zwei Reaktionskomponenten zum Einsatz gelangen, wobei die Polyisocyanatkomponente a) die erste und die Komponente b) die zweite Reaktionskomponente darstellen, und wobei die gegebenenfalls mitzuverwendenden Hilfs- und Zusatzmittel c) der Komponente a) und/oder der Komponente b) zugemischt werden, dadurch gekennzeichnet, daß man als Komponente b) mindestens eine, gegebenenfalls zusammen mit weiteren, gegenüber Isocyanatgruppen reaktionsfähigen Verbindungen vorliegende, mindestens drei aliphatische Ethergruppen aufweisende, n aliphatisch gebundene, gegenüber Isocyanatgruppen reaktionsfähige Gruppen aufweisende Verbindung b1) verwendet, wobei n für eine ganze oder (im statistischen Mittel) gebrochene Zahl von 2 bis 4 steht,

(i) deren gegenüber Isocyanatgruppen reaktionsfähige Gruppen zu mindestens (100 : n) % aliphatisch gebundene primäre oder sekundäre Aminogruppen darstellen, die

(ii) ihrerseits zu mindestens 20 % in Form von, im Sinne der Isocyanat-Additionsreaktion difunktionellen, Ammoniumcarbamatgruppen, wie sie durch Umsetzung von aliphatisch gebundenen, primären oder sekundären Aminogruppen mit Kohlendioxid entstehen und/oder in Form von Ammoniumcarbonat- und/oder Ammoniumbicarbonatgruppen, wie sie durch Umsetzung von aliphatisch gebundenen, primären oder sekundären Aminogruppen mit Kohlendioxid und Wasser entstehen, vorliegen, wobei mindestens 20 Äquivalentprozent der genannten modifizierten Aminogruppen Carbonat- und/oder Bicarbonatgruppen darstellen, wobei

(iii) die unmodifizierten, Ethergruppen aufweisenden Verbindungen ein Molekulargewicht von 200 bis 10.000 aufweisen und wobei

(iv) sich die gegenüber Isocyanatgruppen reaktionsfähigen Gruppen (im Gesamtgemisch) zu 0,2-100 Äquivalentprozent aus Ammoniumcarbamat-, -carbonat- und/oder -bicarbonat-Gruppen zusammensetzen.

2. Verfahren gemäß Anspruch 1, dadurch gekennzeichnet, daß man als weitere Komponente b)

b2) mindestens eine Ammoniumcarbamat-, -carbonat- und -bicarbonat-freie Verbindung des Molekulargewichtsbereichs 400 bis 10.000 mit gegenüber Isocyanatgruppen reaktionsfähigen Gruppen und

b3) mindestens ein Ammoniumcarbamat-, -carbonat- und -bicarbonat-freies, im Sinne der Isocyanat-Polyadditionsreaktion mindestens difunktionelles Kettenverlängerungs- bzw. Vernetzungsmittel des Molekulargewichtsbereichs 18 bis 399 mitverwendet.

3. Verfahren gemäß Anspruch 2, dadurch gekennzeichnet, daß man als Komponente b3) Verbindungen oder Gemische von Verbindungen ausgewählt aus der Gruppe bestehend aus

(i) Diaminen mit zwei primären und/oder sekundären aromatisch gebundenen Aminogruppen des Molekulargewichtsbereichs 108 - 399,

(ii) gegebenenfalls Ethergruppen und mindestens zwei gegenüber Isocyanatgruppen reaktionsfähige Gruppen aufweisenden Aminoalkoholen des Molekulargewichtsbereichs 61 - 399,

(iii) aliphatischen Polyaminen mit mindestens zwei primären oder sekundären Aminogruppen des Molekulargewichtsbereichs 60 - 399 und

(iv) gegebenenfalls Ethergruppen aufweisenden, mindestens zweiwertigen primären oder sekundären Alkoholen des Molekulargewichtsbereichs 62 - 399

verwendet.

4. Verfahren gemäß Anspruch 2 und 3, dadurch gekennzeichnet, daß man als Komponente b3) diprimäre, aromatische Diamine verwendet, die in mindestens jeweils einer ortho-Stellung zu den Aminogruppen Ethyl-, n-Propyl- und/oder iso-Propyl-Substituenten und gegebenenfalls in weiteren ortho-Stellungen zu den Aminogruppen Methylsubstituenten aufweisen.

5. Verfahren gemäß Anspruch 1 bis 4, dadurch gekennzeichnet, daß man als Komponente c) innere Formtrennmittel mitverwendet.

6. Verfahren gemäß Anspruch 1 bis 5, dadurch gekennzeichnet, daß man die Komponenten a) - c) nach der Reaktionsspritzgußtechnik verarbeitet.

7. Zur Durchführung des Verfahrens gemäß Anspruch 1 geeignete, bei Raumtemperatur flüssige, mindestens drei aliphatische Ethergruppen und n aliphatisch gebundene, gegenüber Isocyanatgruppen reaktionsfähige Gruppen aufweisende Verbindungen, wobei m für eine ganze oder (im statistischem Mittel) gebrochene Zahl von 2 bis 4 steht, die gegebenenfalls im Gemisch mit Ammoniumcarbamat-, -carbonat- und -bicarbonat-freien Verbindungen des Molekulargewichtsbereichs 400 bis 10.000 mit gegenüber Isocyanatgruppen reaktionsfähigen Gruppen und/oder gegebenenfalls im Gemisch mit Ammoniumcarbamat-, -carbonat- und -bicarbonat-freien, im Sinne der Isocyanat-Polyadditionsreaktion mindestens difunktionellen Kettenverlängerungs- bzw. Vernetzungsmitteln des Molekulargewichtsbereichs 18 bis 399 und/oder gegebenenfalls im Gemisch mit dem in der Polyurethanchemie an sich bekannten Hilfs- und Zusatzmitteln vorliegen, dadurch gekennzeichnet, daß

(i) mindestens (100 : n) % der insgesamt n gegenüber Isocyanatgruppen reaktionsfähigen Gruppen aliphatisch gebundene primäre und/oder sekundäre Aminogruppen darstellen, die

(ii) ihrerseits zu mindestens 20 % in Form von, im Sinne der Isocyanat-Additionsreaktion difunktionellen, Ammoniumcarbamatgruppen, wie sie durch Umsetzung von aliphatisch gebundenen, primären oder sekundären Aminogruppen mit Kohlendioxid entstehen und/oder in Form von Ammoniumcarbonat- und/oder Ammoniumbicarbonatgruppen, wie sie durch Umsetzung von aliphatisch gebundenen, primären oder sekundären Aminogruppen mit Kohlendioxid und Wasser entstehen, vorliegen, wobei mindestens 20 Äquivalentprozent der genannten modifizierten Aminogruppen Carbonat- und/oder Bicarbonatgruppen darstellen, wobei

(iii) die unmodifizierten, Ethergruppen aufweisenden Verbindungen ein Molekulargewicht von 200 bis 10.000 aufweisen und wobei

(iv) sich die gegenüber Isocyanatgruppen reaktionsfähigen Gruppen (im Gesamtgemisch) zu 0,2 bis 100 Äquivalentprozent aus Ammoniumcarbamat-, -carbonat- und/oder -bicarbonat-Gruppen zusammensetzen.

## Claims

1. Process for the production of microcellular or foamed polyurea-based mouldings by reacting a reaction mixture of

a) polyisocyanate component, consisting of at least one di- or polyisocyanate containing only aromatically bound isocyanate groups,

b) at least one compound containing groups which are reactive towards isocyanate groups and

c) optionally the auxiliaries and additives known per se in polyurethane chemistry,

in closed moulds, by the one-shot system, while adhering to an NCO index of 70 to 130, wherein two reaction components are used, the polyisocyanate component a) representing the first reaction component and component b) representing the second reaction component, and wherein the auxiliaries and additives c) which are optionally also to be used are mixed with component a) and/or component b), characterised in that at least one compound b1) which contains at least three aliphatic ether groups and n aliphatically bound groups which are reactive towards isocyanate groups and is optionally present together with other compounds which are reactive towards isocyanate groups, n representing a whole or (on a statistical average) broken number from 2 to 4,

(i) at least (100 : n) % of whose groups which are reactive towards isocyanate groups are aliphatically bound primary or secondary amino groups of which in turn

(ii) at least 20 % are present in the form of ammonium carbamate groups which are difunctional in the context of the isocyanate addition reaction and are of the type formed by the reaction of aliphatically bound primary or secondary amino groups with carbon dioxide, and/or in the form of ammonium carbonate and/or ammonium bicarbonate groups of the type formed by the reaction of aliphatically bound primary or secondary amino groups with carbon dioxide and water, at least 20 equivalent percent of the modified amino groups mentionend being carbonate and/or bicarbinate groups,

(iii) the unmodified compounds containing ether groups having a molecular weight of 200 to 10,000 and

(iv) 0.2 to 100 equivalent percent of the groups (in the mixture as a whole) which are reactive towards isocyanate groups consisting of ammonium carbamate, carbonate and/or bicarbonate groups, is used as component b).

2. Process according to Claim 1, characterised in that

b2) at least one compound which has a molecular weight of 400 to 10,000, is free from ammonium carbamate, carbonate and bicarbonate and contains groups which are reactive towards isocyanate groups and

b3) at least one chain-extending or crosslinking agent which is free from ammonium carbamate, carbonate and bicarbonate, is at least difunctional in the context of the isocyanate polyaddition reaction and has a molecular weight in the range 18 to 399,

are also used as a further component b).

3. Process according to Claim 2, characterised in that compounds or mixtures of compounds selected from the group consisting of

(i) diamines containing two primary and/or secondary, aromatically bound amino groups having a molecular weight in the range 108 - 399,

(ii) aminoalcohols optionally containing ether groups and at least two groups which are reactive towards isocyanate groups and having a molecular weight in the range 61 - 399,

(iii) aliphatic polyamines containing at least two primary or secondary amino groups and having a molecular weight in the range 60 - 399 and

(iv) at least dihydric primary or secondary alcohols optionally containing ether groups and having a molecular weight in the range 62 - 399

are used as component b3).

4. Process according to Claim 2 and 3, characterised in that diprimary aromatic diamines which contain ethyl, n-propyl and/or isopropyl substituents in at least one ortho position to each amino group and optionally methyl substituents in other ortho positions to the amino groups, are used as component b3).

5. Process according to Claim 1 to 4, characterised in that internal mould release agents are used as component c).

6. Process according to Claim 1 to 5, characterised in that components a) to c) are processed by the reaction injection moulding technique.

7. Compounds which are liquid at room temperature, contain at least three aliphatic ether groups and n aliphatically bound groups which are reactive towards isocyanate groups, n representing a whole or (on a statistical average) broken number from 2 to 4, are suitable for carrying out the process according to Claim 1 and are optionally in admixture with compounds which are free from ammonium carbamate, carbonate and bicarbonate, have a molecular weight in the range 400 to 10,000 and contain groups which are reactive towards isocyanate groups and/or are optionally in admixture with chain-extending or crosslinking agents which are at least difunctional in the context of the isocyanate polyaddition reaction, are free from ammonium carbamate, carbonate and bicarbonate and have a molecular weight in the range 18 to 399 and/or are optionally in admixture with the auxiliaries and additives known per se in polyurethane chemistry, characterised in that

(i) at least (100 : n) % of the total of n groups which are reactive towards isocyanate groups are aliphatically bound primary and/or secondary amino groups of which in turn

(ii) at least 20 % are present in the form of ammonium carbamate groups which are difunctional in the context of the isocyanate addition reaction and are of the type formed by the reaction of aliphatically bound primary or secondary amino groups with carbon dioxide, and/or in the form of ammonium carbonate and/or ammonium bicarbonate groups of the type formed by the reaction of aliphatically bound, primary or secondary amino groups with carbon dioxide and water, at least 20 equivalent percent of the modified amino groups mentioned being carbonate and/or bicarbonate groups,

(iii) the unmodified compounds containing ether groups having a molecular weight of 200 to 10,000 and

(iv) 0.2 to 100 equivalent percent of the groups (in the mixture as a whole) which are reactive towards isocyanate groups consisting of ammonium carbamate, carbonate and/or bicarbonate groups.

## Revendications

1. Procédé de production de pièces moulées microcellulaires ou en mousse à base de polyurée par réaction dans des moules fermés d'un mélange réactionnel

a) d'un composant polyisocyanate constitué d'au moins un diisocyanate ou polyisocyanate à groupes isocyanato exclusivement en liaison aromatique,

b) d'au moins un composé à groupes réactifs vis-à-vis de groupes isocyanato et

c) le cas échéant, des adjuvants et additifs d'emploi connu dans la chimie des polyuréthannes

selon le principe one-shot avec maintien d'un indice de NCO de 70 à 130, en utilisant deux composants réactionnels, de sorte que le composant polyisocyanate a) constitue le premier et le composant b) constitue le second composant réactionnel, et les adjuvants et additifs devant être utilisés éventuellement étant mélangés au composant a) et/ou au composant b), caractérisé en ce qu'on utilise comme composant b) au moins un composé b1) portant trois groupes éther aliphatiques et n groupes en liaison aliphatique, aptes à réagir vis-à-vis de groupes isocyanato, éventuellement présent avec d'autres composés aptes à réagir vis-à-vis de groupes isocyanato, n étant un nombre entier ou fractionnaire (en moyenne statistique) de 2 à 4,

(i) dont les groupes aptes à réagir vis-à-vis de groupes isocyanato représentent une proportion d'au moins (100 : n) % de groupes amino primaires ou secondaires en liaison aliphatique, qui

(ii) sont présents quant à eux en proportion d'au moins 20 % sous la forme de groupes carbamate d'ammonium difonctionnels dans le sens de la réaction d'addition d'isocyanate, comme il s'en forme par réaction de groupes amino primaires ou secondaires en liaison aliphatique avec l'anhydride carbonique et/ou sous la forme de groupes carbonate d'ammonium et/ou bicarbonate d'ammonium comme il s'en forme par réaction de groupes amino primaires ou secondaires en liaison aliphatique avec l'anhydride carbonique et l'eau, au moins 20 % d'équivalents des groupes amino modifiés mentionnés représentent des groupes carbonate et/ou bicarbonate,

(iii) les composés non modifiés porteurs de groupes éther ayant un poids moléculaire de 200 à 10 000 et

(iv) les groupes aptes à réagir vis-à-vis de groupes isocyanato (en mélange total) se composant de 0 à 100 % d'équivalents de groupes carbamate, carbonate et/ou bicarbonate d'ammonium.

2. Procédé suivant la revendication 1, caractérisé en ce qu'on utilise comme autre composant b)

b2) au moins un composé dépourvu de carbamate, carbonate et bicarbonate d'ammonium, de poids moléculaire compris dans l'intervalle de 400 à 10 000, porteur de groupes réactifs vis-à-vis de groupes isocyanato et

b3) au moins un agent d'allongement de chaîne ou de réticulation dépourvu de carbamate, carbonate et bicarbonate d'ammonium, au moins difonctionnel dans le sens de la réaction de polyaddition d'isocyanate, de poids moléculaire compris dans l'intervalle de 18 à 399.

3. Procédé suivant la revendication 2, caractérisé en ce qu'on choisit comme composant b3) des composés ou des mélanges de composés du groupe constitué

(i) de diamines portant deux groupes amino primaires et/ou secondaires en liaison aromatique, de poids moléculaire compris dans l'intervalle de 108 à 399;

(ii) d'aminoalcools de poids moléculaire compris dans l'intervalle de 61 à 399, portant éventuellement des groupes éther et portant au moins deux groupes aptes à réagir vis-à-vis de groupes isocyanato,

(iii) de polyamines aliphatiques portant au moins deux groupes amino primaires ou secondaires de poids moléculaire compris dans l'intervalle de 60 à 399 et

(iv) d'alcools primaires ou secondaires au moins divalents, portant éventuellement des groupes éther, de poids moléculaire compris dans l'intervalle de 62 à 399.

4. Procédé suivant la revendication 2 ou 3, caractérisé en ce qu'on utilise comme composant b3) des diamines aromatiques diprimaires qui portent des substituants éthyle, n-propyle et/ou isopropyle à chaque fois dans au moins une position ortho par rapport aux groupes amino et, le cas échéant, des substituants méthyle dans d'autres positions ortho par rapport aux groupes amino.

5. Procédé suivant les revendications 1 à 4, caractérisé en ce qu'on utilise comme composant c) des agents de démoulage internes.

6. Procédé suivant les revendications 1 à 5, caractérisé en ce qu'on met en oeuvre les composants a) à c) selon la technique du moulage réactionnel par injection.

7. Composés liquides à la température ambiante, portant au moins trois groupes éther aliphatiques et n groupes en liaison aliphatique, aptes à réagir vis-à-vis de groupes isocyanato, pouvant être utilisés pour la mise en oeuvre du procédé suivant la revendication 1, dans lesquels n représente un nombre entier ou fractionnaire (en moyenne statistique) de 2 à 4, qui sont présents le cas échéant en mélange avec des composés dépourvus de carbamate, carbonate et bicarbonate d'ammonium, de poids moléculaire compris dans l'intervalle de 400 à 10 000 et porteur de groupes aptes à réagir vis-à-vis de groupes isocyanato et/ou le cas échéant en mélange avec des agents d'allongement de chaîne ou des agents de réticulation dépourvus de carbamate, carbonate et bicarbonate d'ammonium, au moins difonctionnels dans le sens de la réaction de polyaddition d'isocyanate, de poids moléculaire compris dans l'intervalle de 18 à 399 et/ou le cas échéant en mélange avec les adjuvants et additifs d'emploi connu dans la chimie des polyuréthannes, caractérisés en ce que

(i) au moins (100 : n) % du total des n groupes aptes à réagir vis-à-vis de groupes isocyanato représente des groupes amino primaires et/ou secondaires en liaison aliphatique, qui

(ii) sont présents, quant à eux, en proportion d'au moins 20 % sous la forme de groupes carbamate d'ammonium, difonctionnels dans le sens de la réaction d'addition d'isocyanate, comme il s'en forme par réaction de groupes amino primaires ou secondaires, en liaison aliphatique, avec l'anhydride carbonique et/ou sous la forme de groupes carbonate d'ammonium et/ou bicarbonate d'ammonium, comme il s'en forme par réaction de groupes amino primaires ou secondaires en liaison aliphatique, avec l'anhydride carbonique et l'eau, au moins 20 % d'équivalents des groupes amino modifiés mentionnés représentant des groupes carbonate et/ou bicarbonate,

(iii) les composés non modifiés porteurs de groupes éther ayant un poids moléculaire de 200 à 10 000 et

(iv) les groupes aptes à réagir vis-à-vis de groupes isocyanato (dans le mélange total) se composant, en proportion de 0,2 à 100 % d'équivalents, de groupes carbamate, carbonate et/ou bicarbonate d'ammonium.